# EUROPEAN PATENT SPECIFICATION

(11) **EP 3 028 966 B1**
(45) Date of publication and mention of the grant of the patent: **06.03.2019**
(21) Application number: 15075040.4
(22) Date of filing: 02.12.2015
(51) Int. Cl.: B65G 69/00

(54) **DEVICE FOR THE MANUAL BLOCKING OF THE WHEEL OF A TRUCK ON A LANE IN FRONT OF A FACADE WITH A LOADING AND UNLOADING PLATFORM**
VORRICHTUNG ZUR MANUELLEN BLOCKIERUNG DES RADES EINES LASTKRAFTWAGENS AUF EINER FAHRSPUR VOR EINER FASSADE MIT EINER LADE- UND ENTLADEPLATTFORM
DISPOSITIF POUR LE BLOCAGE MANUEL DE LA ROUE D'UN CAMION SUR UNE VOIE EN AVANT D'UNE FAÇADE AVEC UNE PLATE-FORME DE CHARGEMENT ET DE DÉCHARGEMENT

(30) Priority: 05.12.2014 NL 1041083
(43) Date of publication of application: 08.06.2016
(73) Proprietor: Hörmann Alkmaar BV, 1800 GC Alkmaar (NL)
(72) Inventor: Stroet, Johannes Franciscus, 1704 WL Heerhugowaard (NL); Wolkers, Frank, 1721 HE Broek op Langedijk (NL); Koopman, Arie Pieter Cornelis, 1771 RW Wieringerwerf (NL); van der Zee, Bart, 1871 TC Schoorl (NL)
(74) Representative: Koomen, M.J.I.

(56) References cited:
- FR-A1- 2 832 113
- US-A1- 2010 170 754
- US-A1- 2011 162 916
- US-A1- 2014 255 134

## Description

The present invention relates to a device for the manual blocking of the wheel of a truck on a lane in front of a façade with a loading and unloading platform, according to the preamble of claim 1.

US 2010/0170754 A1 discloses a device for the manual locking of the wheel of a truck according to the preamble of claim 1.

It is an object of the present invention to provide a device by means of which the locking of the wheel of a truck and the locking of the carriage to the guide, as well as the releasing again thereof, can take place in a more simple manner.

The device according to the invention is defined in claim 1.

According to a characteristic of the device according to the invention the locking arm has the form of a rod or beam, the outer end of which is rotatably mounted onto an axle that is vertically provided onto the carriage, while the rod or beam further is mounted in such a way, that this can only be rotated sideways in the direction away from the façade towards the road side.

According to a further characteristic of the device according to the invention the unevennesses provided in the surface of a part of the locking arm are formed by introversions and/or protruberances, and, according to a further characteristic, these are provided onto the bottom side of the outer end of the locking arm connected to the carriage. Thereby, according to a further characteristic of the device, these are provided to the locking arm in such a way, that by a rotating of the locking arm the unevennesses can come into contact with the cam roller provided on the adjusting organ.

According to another characteristic of the device according to the invention the adjusting organ in the housing part is movable upwards and downwards, while the cam roller is provided to the adjusting organ in such a way, that at a movement upwards of the adjusting organ this can come into contact with the unevennesses, whereby the locking means provided onto the guide is formed by a rack and the locking means provided onto the adjusting organ is formed by a counter rack, whereby the rack and counter rack are positioned in such a way, that at a movement upwards of the adjusting organ the teeth of the counter rack move in the direction of the teeth of the rack.

Further characteristics and particulars of the device according to the invention will be described with reference to the drawings of an example of an embodiment.
Figure 1 shows a perspective view of a loading and unloading platform with shown thereon three lanes, alongside each other with each a device according to the invention.
Figure 2a shows a perspective view, in part cut away, of an embodiment of the device according to the invention.
Figure 2b shows a side view, in part cut away, of the device according to figure 2a.
Figure 3a shows a perspective view, in part cut away, of the device according to the invention.
Figure 3b shows a side view, in part cut away, of the device according to figure 3a.
Figure 4a shows a perspective view, in part cut away, of the device according to the invention.
Figure 4b shows a side view, in part cut away, of the device according to figure 4a.
Figure 5a shows a perspective view, in part cut away, of the device according to the invention.
Figure 5b shows a side view, in part cut away, of the device according to figure 5a.
Figure 5c shows a side vieuw according to figure 5b, still further cut-out.
Figure 6a shows a perspective view, in part cut away, of the device according to the invention.
Figure 6b shows a side view, in part cut away, of the device according to figure 6a.
Figure 6c shows a side vieuw according to figure 6b, still further cut-out.
Figure 7 shows a perspective view of a locking arm such as applied in the device according to the invention.
Figure 8 shows a perspective view of an embodiment of the device.
Figure 9 shows a perspective view of an embodiment of the device, with cover.

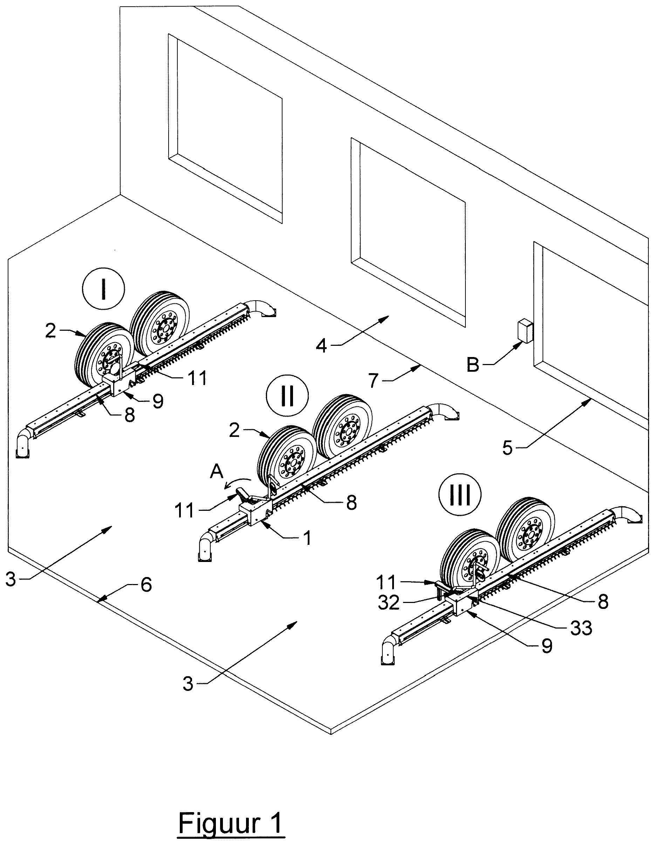

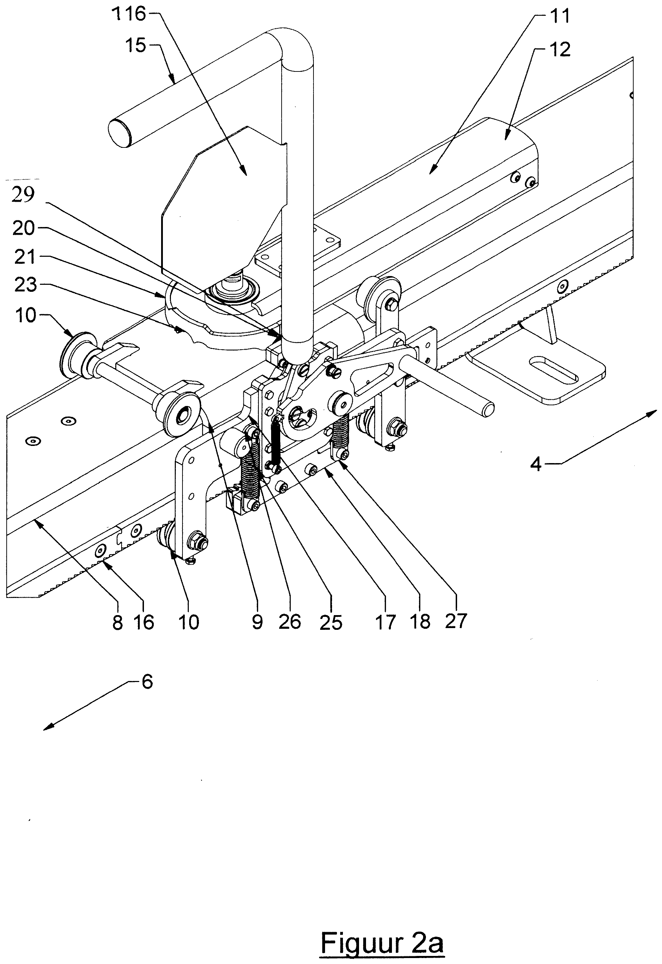

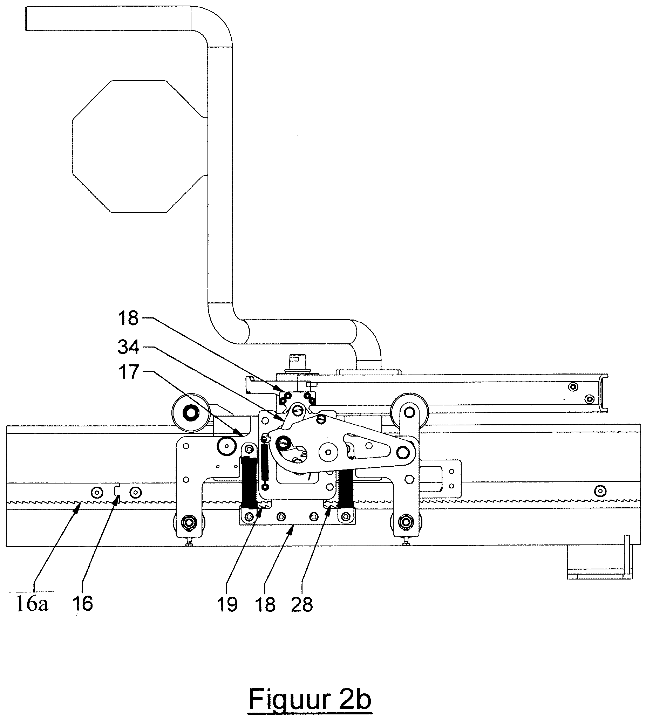

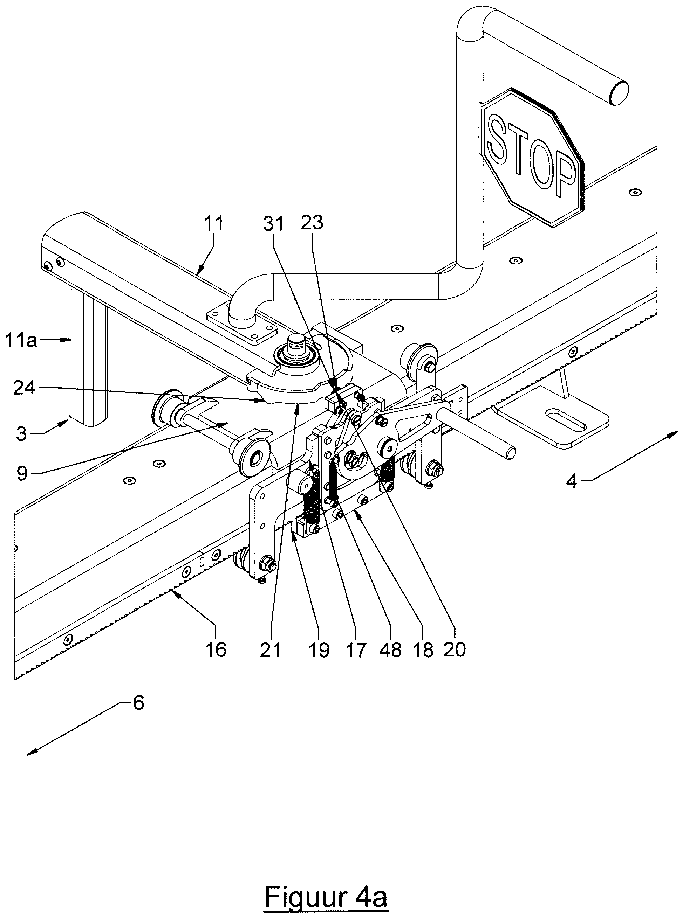

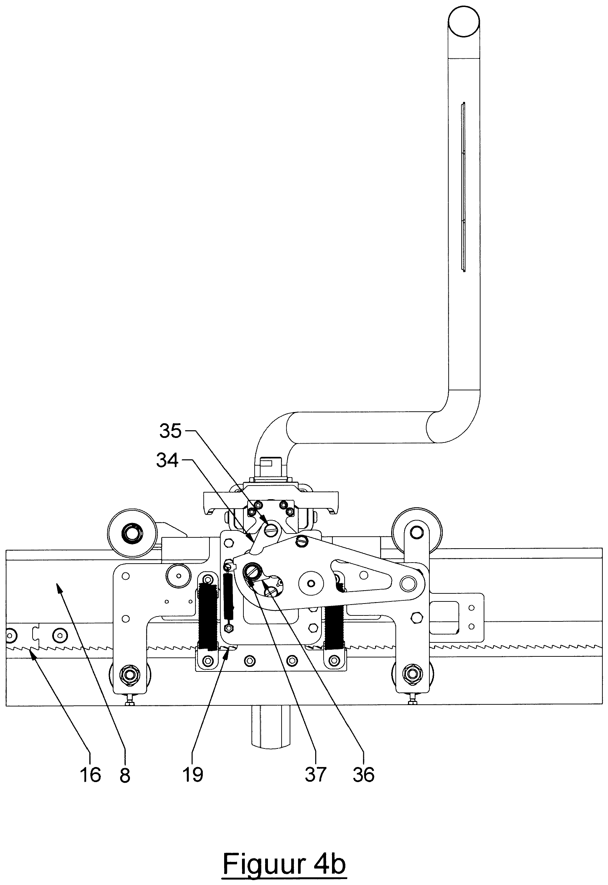

As can be seen in figure 1 the device 1 for the manual blocking of the wheel 2 of a truck on a lane 3 in front of a façade 4 with a loading and unloading platform 5 comprises a guide 8 provided alongside and parallel to the lane 3, extending from a road side 6 to a façade side 7. As can be seen in figures 2a to 6c a carriage 9 is movable on the guide 8 on rollers 10. The carriage 9 is provided with a locking arm 11 that is moveable between a starting position, shown under I in figure 1 and in the figures 2a and 2b, in which the locking arm 11 extends alongside the lane 3, and an end position, shown in figure 1 under III and in the figures 4a and 4b, in which the locking arm 11 partially extends above the lane 3 and therein can rest blocking against the wheel 2 of a truck.

The locking arm 11 further is provided with a part 11a, on which the locking arm 11 can be supported on the lane, when a wheel 2 rests upon it.

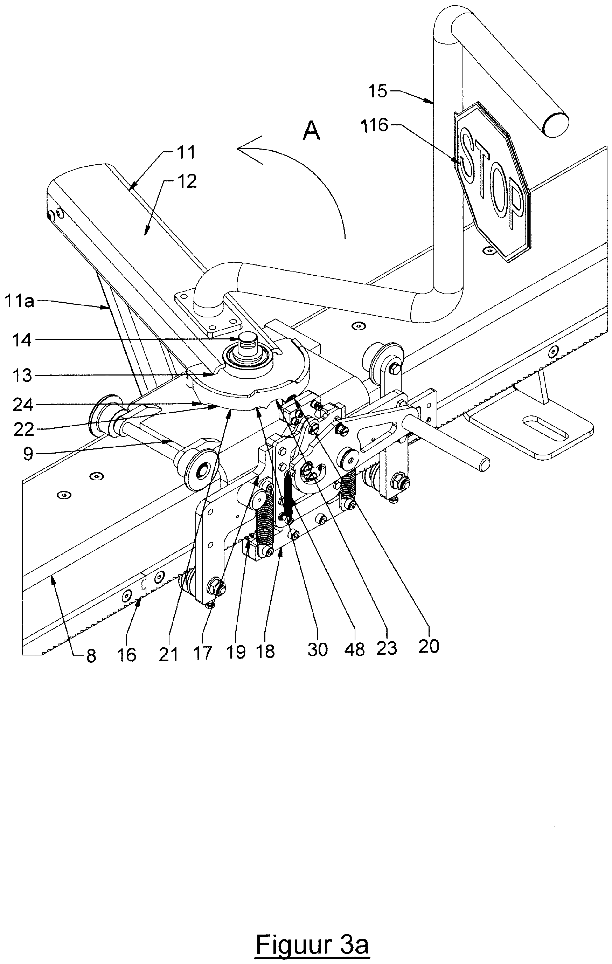

In the embodiment shown the locking arm 11 has the form of a rod or beam 12. The locking arm 11 with an outer end 13 is rotatably mounted onto an axle 14 that is vertically provided onto the carriage. The locking arm 11 is mounted in such a way, that this can only be rotated sideways in the direction towards the road side 6, as shown by the arrow A in figure 1 under II and the arrow A in figure 3a. Onto the locking arm 11 further a handgrip 15 is mounted by means of which the locking arm 11 can be rotated sideways. In a favourable manner the handgrip can be provided with an information board 116 with for instance a text such as "stop" and/or a user instruction (figure 3a).

The guide 8 and the carriage 9 are provided with co-operating locking means for bringing about a locking of the carriage 9 to the guide 8. As can be seen in the figures in this example of an embodiment a rack 16 is mounted to the guide 8. The carriage 9 comprises a housing part 17, with respect to which the adjusting organ 18 is movable upwards and downwards. Onto the adjusting organ 18 a counter rack 19 is mounted 3.

The adjusting organ 18 is provided with a cam roller 20, as can be seen in the figures 3a, 4a, 5a and 6a. This cam-roller 20 co-operates with unevennesses 22 provided in the surface of a part 21 of the locking arm 11, such as one or more introversions 23 and one or more protruberances 24. When the locking arm 11 is rotated the cam roller 20 is moved in and /or over the enevennesses 22, 23 and 24. As a result of this the adjusting organ 18 is brought into an upwards and downwards movement. The rack 16 and the counter rack 19 are positioned in such a way, that at a movement downwards of the adjusting organ 18 the teeth of the counter rack 19 move away from the teeth of the rack 16. In the opposite, at a movement upwards of the adjusting organ 18 the teeth of the counter rack 19 move in the direction of the teeth of the rack 16.

As can be seen in the figures two springs 25 are provided, which on an outer end 26 are mounted to the housing part 17 and on an other outer end 27 are mounted to the adjusting organ 18. These springs pull the adjusting organ 18 upwards and pull the counter rack 19 into the engagement with the rack 16. Keeping the counter rack 19 out of engagement with the rack 16 has to take place against the force of the springs 25, and this because the part 21 underneath the locking arm 11, against which the cam roller 20 presses, prevents a movement further upwards of the adjusting organ 18.

The introversians 23 provided in the part 21 underneath the locking arm have variable depths, and the position of the adjusting organ 18 depends on whether and in which introversion 23 the cam roller 20 falls. The depth of at least one of the introversians 23 is such, that when the cam roller 20 falls in this introversion, the adjusting organ 18 takes in a maximum position upwards, such, that the counter rack 19 completely engages the rack 16 and a locking of the carriage 9 onto the guide 8 is accomplished. This position is shown in the figures 4a and 4b.

As can be seen in figure 1 and the figures 2a to 6c the locking arm 11 is rotatable from a starting position, in which the locking arm extends alongside the lane 3, to an end position, in which the locking 11 arm partially extends above the lane and therein rests blocking against the wheel 2 of a truck. In the starting position the locking arm is above and parallel to the guide 8.

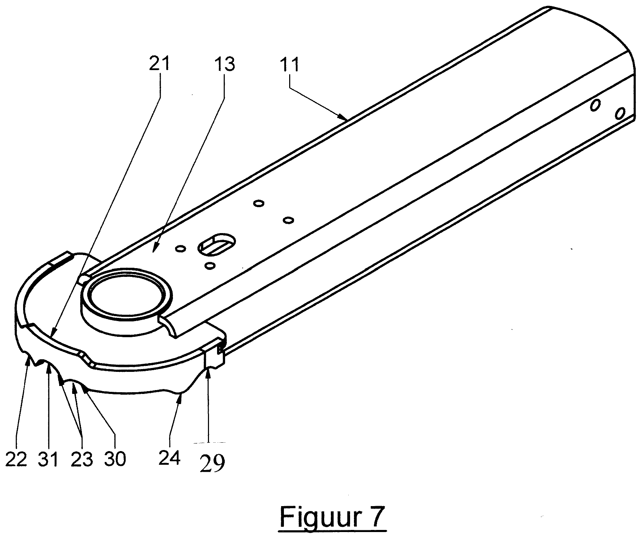

A first introversion 29, shown in figure 2a and figure 7, is provided on the locking arm 11 at such a location, that when the locking arm is in the starting position, the cam roller 20 falls in this first introversion. The device is then in the starting position shown in figure 1 under I and in the figures 2a and 2b. The rack 16 and the counter rack 19 do not engage each other and the carriage 9 can be freely rolled along the guide 8.

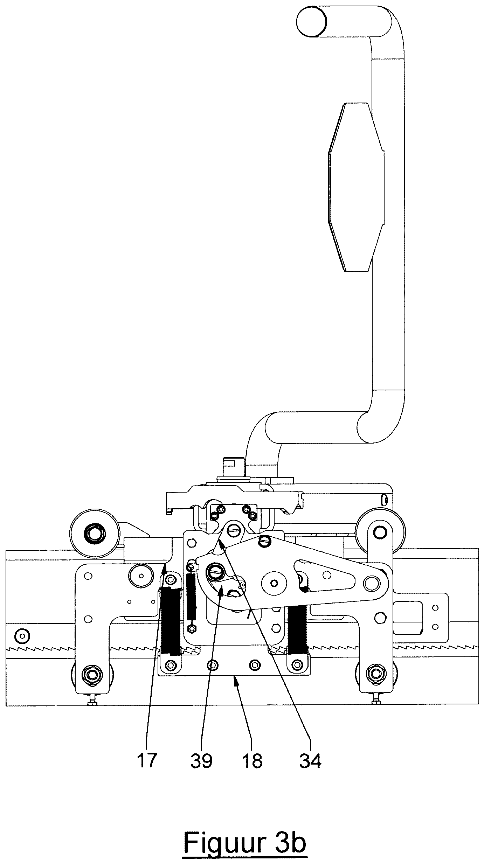

A second introversion 30 is provided at such a location, see figures 3a and 7, that when the locking arm 11 takes up an angle between approximately 65 degrees to 85 degrees relative to the guide, the cam roller 20 falls in this second introversion 30. The device is then partly rotated out and in the position shown in figure 1 under II and in figure 3a and 3b. In this position the locking arm stands still a while; the user does not yet rotate the arm completely out into the end position. In this manner it is still possible, when the truck is parked in front of the loading and unloading platform, to push the device, with a locking arm 11 partly rotated out, towards the wheel 2. By a further pushing thereafter of the carriage 9 towards the wheel 2 the locking arm 11 is pushed into the end position by the wheel 2.

As can be seen in the figures 2b, 3b and 4b the teeth 16a on the rack 16 and the teeth 28 on the counter rack 19 are inclined adapted to each other, such, that when the counter rack 19 engages the rack 16, the carriage is locked on the guide against movement towards the road side 6 but is still capable of movement towards the façade side 4.

A third introversion 31 is provided at such a location onto the part 21 of the locking arm 11, that when the locking arm 11 takes up an angle of 90 degrees relative to the guide 8, the cam roller 20 falls in this third introversion 31. This third introversion 31 has a depth such, that when the cam roller 20 is present in this third introversion 31, the adjusting organ 18 has moved upwards relative to the housing part 17 such, that the counter rack 19 completely engages the rack 16. The carriage 9 is then locked completely onto the guide 8 against movement towards the road side 6, but not against movement towards the façade side 4. In this position it is still possible, when the truck is parked in front of the loading and unloading platform, to push the device, with the locking arm 11 rotated out, closer towards the wheel 2.
Herewith the device is in the end position and locking position shown in figure 1 under III and figure 4a and 4b.

Because the guide 8 if so desired can be provided with the rack 16 alongside the entire length thereof the device can be locked to the guide at any given position.

In the end position the locking arm takes up an angle of 90 degrees relative to the guide 8. In this position the locking arm 11 rests against a part 32 of the housing 33 in which the locking arm 11 is taken up, as can be seen in figure 1. This part 32 limits the path of the rotating movement of the locking arm 11 in the direction towards the road side 6. In this end position the locking arm 11 rests against the wheel 2 of the truck. This therefore cannot roll away from the loading platform 5.

In this end position the locking arm 11 cannot be rotated back in the direction of the façade 4 without a further measure, because the wheel 2 of the truck holds up this rotating back.

In connection with this the device is provided with unlocking means. By means of this the adjusting organ 18 can be moved downwards relative to the housing part 17, when the cam roller 20 is in the third introversion 31, and the counter rack 19 can be brought, against the working of the springs 25, out of the engagement with the rack 16.

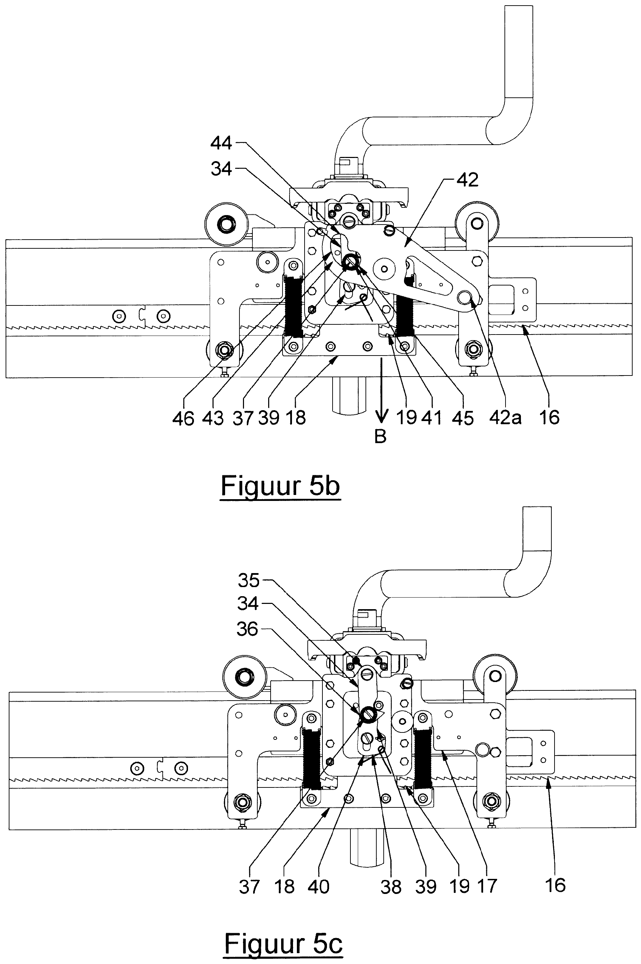

To this end a first arm 34 is provided, which with one outer end 35 is rotatably connected to the housing part 17 and with the other outer end 36 by way of a connecting point 37 rotatably is connected to the outer end 38 of a second arm 39, which second arm with the other outer end 40 rotatably is supported on the adjusting organ 18. In a rest position the arms take up an angle relative to each other, as can be seen in the figures 2b, 3b and 4b. From this rest position the arms 34, 39 are movable into an adjusting position, in which the arms 34, 39 tend to be relative to one another in a more or less straight line. By means of this the adjusting organ 18 is moved downwards, as can be seen in figure 5b, indicated by the arrow B. By this the counter rack 19 is brought out of the engagement with the rack 16.

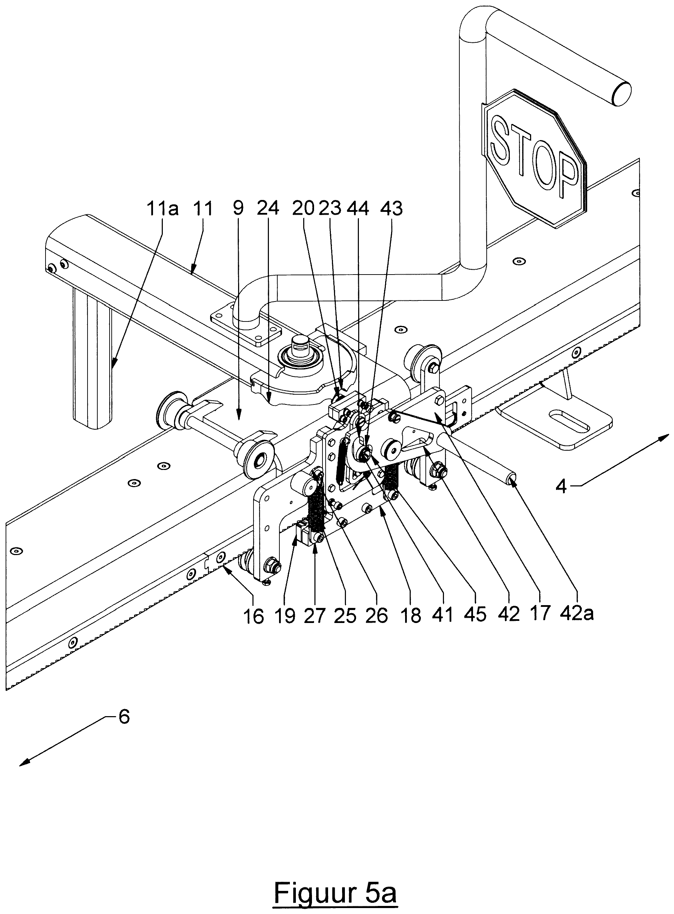

Referring to the figures 5a, 5b and 5c this adjusting takes place as follows. The connecting point 37 between the arms 34, 39 is formed by a further second cam roller 41 that inserts in a groove 43 provided in a movable operating mechanism, in this example of an embodiment a foot pedal plate 42, the groove 43 having a first end stop 44 and a second end stop 45 and a round extending middle part 46. The foot pedal plate 42 is provided with foot support 42a which is to be pushed downwards by the foot. By this movement of the foot pedal plate 42 the second cam roller 41 is moved from the first end stop 44 to the second end stop 45. This brings about the movement of the arms 34, 39 from out of the rest position to the adjusting position.

Because the counter rack 19 no longer engages the rack 16 the device can be rolled away from the wheel 2 in the direction of the road side 6.

The locking arm 11 thereafter can be rotated back from out of the end position.

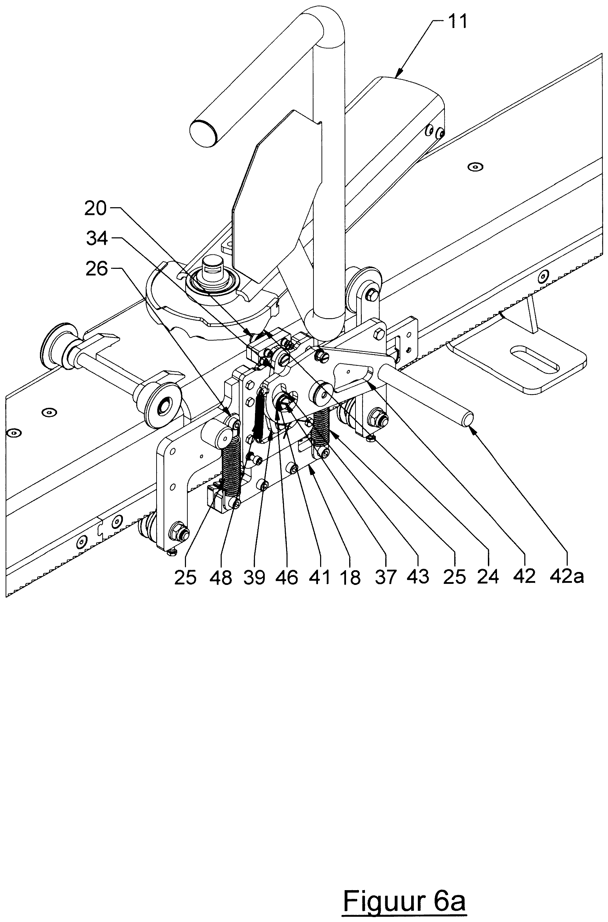

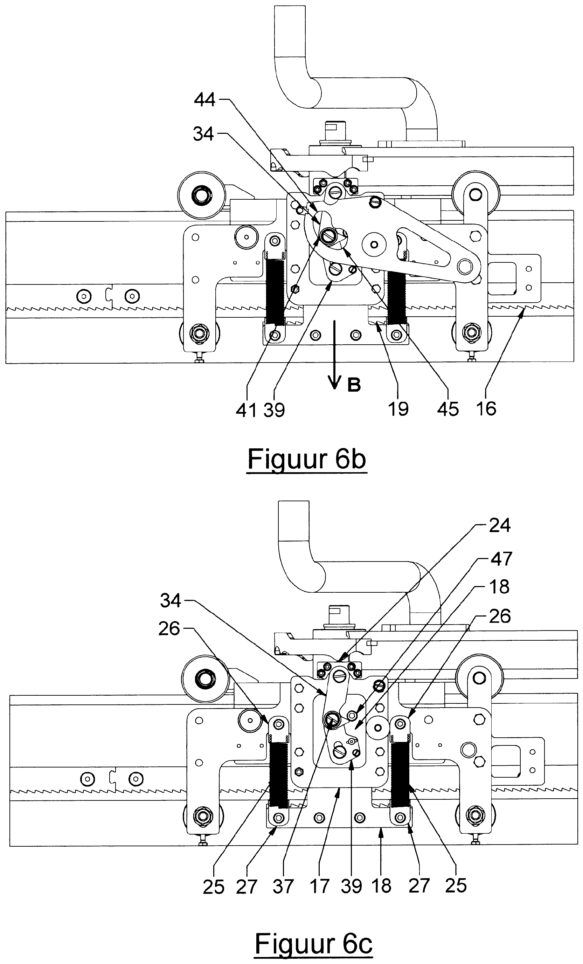

Further means are provided by which the arms 34, 39 can be moved back again from the adjusting position to the rest position.
To that end, with reference to the figures 6a, 6b and 6c and figure 7, onto the part 21 of the locking arm 11 the protuberance 24 is provided (figure 6c and figure 7). This protuberance 24 is provided onto the part 21 of the locking arm 11 in such a way, that when the locking arm 11 is near the starting position and takes up an angle relative to the guide 8 of about in between 5 degrees to 25 degrees, the cam roller 20 contacts this protuberance 24. The device then is in the position shown in figures 6a, 6b and 6c. The adjusting organ 18 is moved downwards by the co-operation of cam-roller 20 and protuberance 24. Onto the adjusting organ 18 a projection 47 is provided, which, relative to the connecting point 37 between the arms 34, 39, is provided in such a way, that this projection 47, at a movement downwards , pushes the arms 34, 39 from the adjusting position back to the rest position. Thereby the second cam roller 41 moves from the second end stop 45 back to the first end stop 44 in the groove 43 in the foot pedal plate 42. Under the working of a spring 48 which on the one hand is supported onto the foot pedal plate 42 and on the other hand onto the housing 17 the projection 47 is kept in the first end stop.

Further a security is provided by means of which the foot pedal plate can be held tight, such that this cannot operate the unlocking means. In this manner it can be prevented that the locking of the wheel, established by the locking arm 11 and the locking of the carriage 9 to the guide 8, is released unintentionally, which leads to a dangerous situation during the process of loading and unloading.

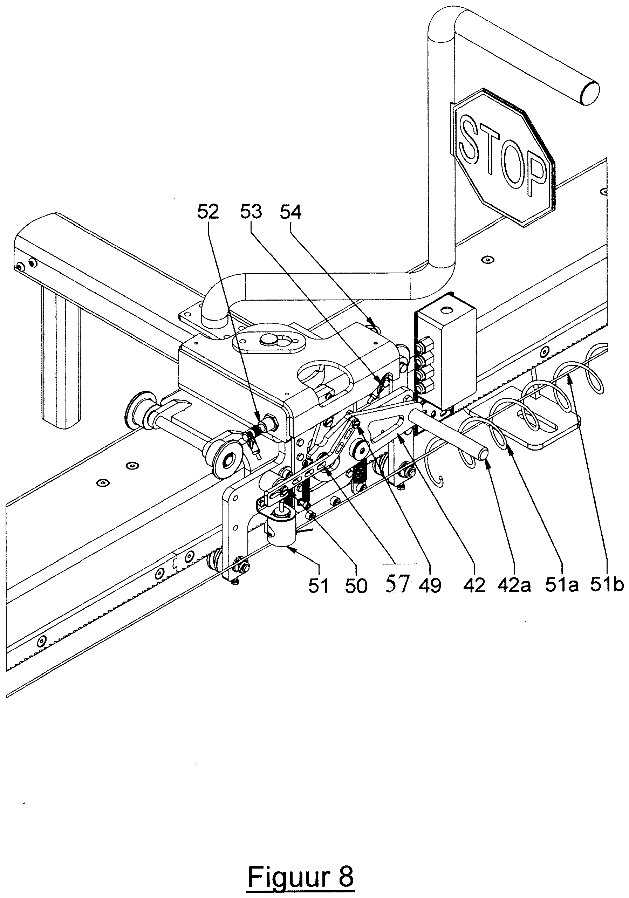

As can be seen in figure 8 the device to that end is provided with a part 57, which is connected at a part 49 to the foot pedal plate 42 and at a part 50 is connected to a holding means 51, in this example of an embodiment a solenoid 51, which has a connection cable 51a, led along a guide cable 51b, to a control, which control is indicated schematically in figure 1 at B. In a release position the holding means 51 allows a movement of the foot pedal plate 42. In a holding position this prevents a movement of the foot pedal plate. The control takes place under the working of a signal from a sensor 52 for determining the starting position of the locking arm 11, of a signal from a sensor 53 for determining the end position of the locking arm 11, and of a signal from a sensor 54 for determining the presence of a wheel 2 near the locking arm 11. When the locking arm 11 is in the end position and a wheel 2 is present close by, the holding means 51 is set in the holding position and the foot pedal plate 42 cannot be operated.

Further the control can take place under the working of a signal from a sensor for determining whether the door of the loading and unloading platform involved is or is not closed off. When the door is open, and the loading and unloading is in progress, the holding means is kept in the holding position. After completion of the loading and unloading, the closing of the door of the loading and unloading platform is determined by means of a sensor, after which the closing means is operated in the release position. The foot pedal plate can then again be freely moved.

As can further be seen in the figures the rod 15 is provided with the board 116. This board 116 has a front face 116a and a back face 116b. As can be seen in the figures the front face 116a is provided with a text "stop". This comprises a message, indicating that the locking arm 11 is in the end position and that the device blocks a driving away from the loading platform. Also possible is a text such as "locked" or "blocked" or a symbol. The board 116 is mounted to the rod 15 in such a way, that when the locking arm 11 is rotated in the end position, the front face 116a of the board 116 takes up an angle of about 90 degrees relative to the guide 8 and is directed to the road side 6. In this manner a driver can see from the driver's seat of the truck that is parked in front of the platform that the device is in the blocked position. The driver in that case is warned to not just drive away. This is important in situations in which for instance a trailer has been parked for a period and is picked up at a later time. The text may to that end eventually be provided in reverse.

Onto the back face 116b of the board 116 a user instruction may eventually be provided for a driver operating the device himself.

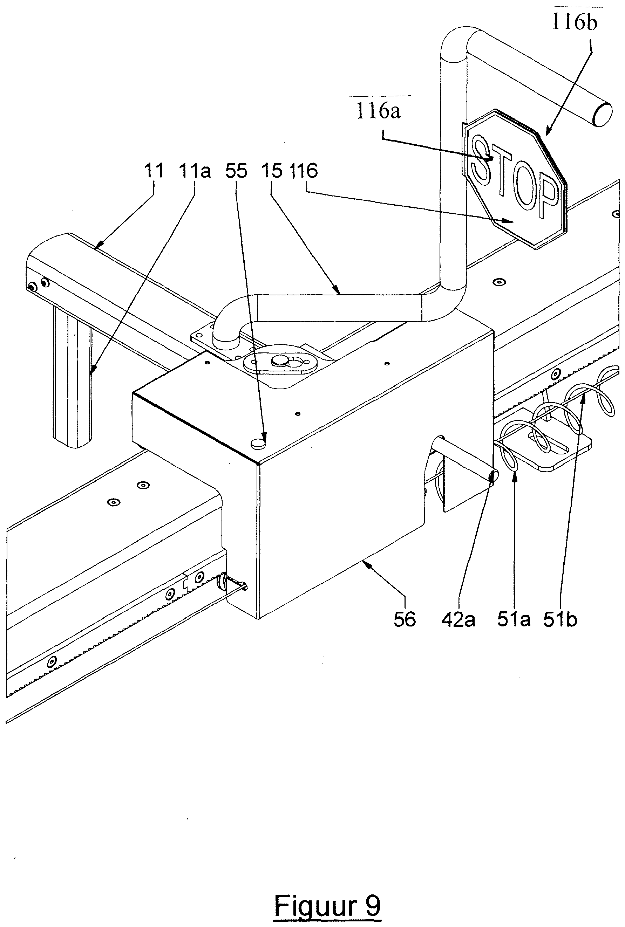

As can further be seen in figure 9 the device is provided with a control lamp 55 on a cover 56; this lamp indicates the correct placement against the wheel on the basis of input of the sensors present.

## Claims

1. Device [1] for manual locking of the wheel [2] of a truck on a lane [3] in front of a façade [4] with a loading and unloading platform [5], comprising a guide [8] provided alongside and parallel to the lane [3], extending from a road side [6] to a façade side [7] and a carriage [9] movable on the guide [8], provided with a locking arm [11] that is moveable between a starting position, in which the locking arm [11] extends alongside the lane [3], and an end position, in which the locking arm [11] partially extends above the lane [3] and therein can rest blocking against the wheel [2] of a truck, wherein the guide [8] and the carriage [9] are provided with co-operating locking means [16,19] for bringing about a locking of the carriage [9] to the guide [8], whereby the device [1] is provided with means by which, by moving of the locking arm [11] from the starting position to the end position, the locking means are operated, whereby said means are formed by an adjusting organ [18] that is movably connected to the carriage [9] and onto which one of the locking means is mounted, **characterized in that** the adjusting organ [18] further is provided with a cam roller [20] co-operating with unevennesses [22] provided in the surface of a part [21] of the locking arm [11], in such a way, that by moving of the locking arm [11] the cam roller [20] is moved in and/or over the unevennesses [22], as a result of which the adjusting organ [18] is brought into movement, and the locking means mounted to the adjusting organ [18] is brought into and out of the engagement with the locking means provided onto the guide [8], whereby the carriage [9] comprises a housing part [17], with respect to which the adjusting organ [18] is movable to and fro, while at least one spring [25] is provided, which on the one side is mounted to the housing part [17] and on the other side to the adjusting organ [18], in such a way, that bringing the locking means [16] that is mounted onto the adjusting organ [18] into respectively out of engagement with the locking means [19] that is provided to the guide [8] takes place under respectively against spring force.

2. Device according to claim 1, **characterized in that** the locking arm [11] has the form of a rod or beam [12] an outer end [13] of which is rotatably provided onto an axle [14] that is vertically provided onto the carriage [9], while the rod or beam [12] further is provided in such a way, that this can only be rotated sideways in the direction away from the façade [4] towards the road side [6].

3. Device according to claim 2, **characterized in that** the rod or beam [12] in the end position takes up an angle of about 90 degrees relative to the guide [8].

4. Device according to one of the preceding claims 1 to 3, **characterized in that** the unevennesses [22] are formed by one or more introversions [23] and one or more protruberances [24].

5. Device according to one of the preceding claims 1 to 4, **characterized in that** the unevennesses [22] are provided onto the bottom side of the outer end of the locking arm [11] connected to the carriage [9].

6. Device according to one of the preceding claims 1 to 5, **characterized in that** the unevennesses [22] are provided to the locking arm [11] in such a way, that by a rotating of the locking arm [11] the unevennesses [22] can come into contact with the cam roller [20] provided onto the adjusting organ [18].

7. Device according to one of the preceding claims 1 to 6, **characterized in that** the adjusting organ [18] is movable upwards and downwards relative to the housing part [17], wherein the locking means provided onto the guide [8] is formed by a rack [16] and the locking means provided onto the adjusting organ is formed by a counter rack [19], whereby the rack [16] and counter rack [19] are positioned in such a way, that at a movement upwards of the adjusting organ [18] the teeth of the counter rack [19] move in the direction towards the teeth of the rack [16].

8. Device according to one of the preceding claims 4 to 7, **characterized in that** a first introversion [29] is provided on the locking arm [11] at such a location, that when the locking arm [11] is in the starting position, the cam roller [20] falls in this first introversion [29].

9. Device according to one of the preceding claims 7 to 8, **characterized in that** the teeth on the rack [16] and those on the counter rack [19] are inclined and adapted to each other, such, that when the counter rack [19] engages the rack [16] the carriage [9] is locked on the guide [8] against movement towards the road side [6] but is not locked against movement towards the façade side [7].

10. Device according to one of the preceding claims 8 to 9, **characterized in that** a second introversion [30] is provided at such a location, that when the locking arm [11] takes up an angle between approximately 65 degrees to 85 degrees relative to the guide [8] the cam roller [20] falls in this second introversion [30].

11. Device according to claim 10, **characterized in that** a third introversion [31] is provided at such a location, that when the locking arm [11] takes up an angle of 90 degrees relative to the guide [8] the cam roller [20] falls in this third introversion [31].

12. Device according to claim 11, **characterized in that** the third introversion [31] has a depth such, that when the cam roller [20] is present in this third introversion [31], the adjusting organ [18] has moved upwards relative to the housing part [17] such, that the counter rack [19] completely engages the rack [16] and the carriage [9] is locked on the guide [8] against movement towards the road side [6].

13. Device according to one of the preceding claims 11 and 12, **characterized in that** the device is provided with unlocking means, by which, when the cam roller [20] is in the third introversion [31], the counter rack [19] can be brought out of engagement with the rack [16].

14. Device according to claim 13, **characterized in that** the means are formed by a first arm [34], which with one outer end [35] is rotatably supported on the housing part [17] and with the other outer end [36] by way of a connecting point [37] rotatably is connected to the outer end [38] of a second arm [39], which second arm [39] with the other outer end [40] rotatably is supported on the adjusting organ [18], whereby the arms [34, 39] are movable from a rest position, in which the arms [34, 39] take up an angle relative to each other, into an adjusting position, in which the arms [34, 39] tend to be relative to one another more in a straight line, and by means of which the adjusting organ [18] is moved downwards.

15. Device according to claim 14, **characterized in that** the connecting point [37] between the arms [34, 39] is formed by a further, second cam roller [41], that inserts in a groove [43] provided in an operating mechanism for unlocking, for instance a foot pedal plate [42], the groove [43] having a first end stop [44] and a second end stop [45] and a round extending middle part [46], wherein by moving of the operating mechanism the second cam roller [41] can be moved from the first end stop [44] to the second end stop [45] and by means of which the arms [34, 39] can be moved from the rest position to the adjusting position.

16. Device according to one of the preceding claims 14 or 15, **characterized in that** further means are provided by which the arms [34, 39] can be moved from the adjusting position to the rest position.

17. Device according to claim 16, **characterized in that** the further means are formed by a protuberance [24] provided on the locking arm [11], such, that when the cam roller [20] contacts this protuberance [24], the adjusting organ [18] is moved downwards relative to the housing part [17], while on the adjusting organ [18] a projection [47] is provided in such a way relative to the connecting point [37] between the arms [34, 39], that at the movement downwards of the adjusting organ [18] this projection [47] pushes the arms [34, 39] from the adjusting position back to the rest position.

18. Device according to one of the preceding claims, **characterized in that** the carriage [9] is provided with an upright rod with a handgrip.

19. Device according to claim 18, **characterized in that** the rod is provided with a board [116] with a front face [116a] and a back face [116b], on one or both of which a text or a symbol is provided.

20. Device according to claim 19, **characterized in that** the board [116] is mounted to the rod in such a way, that when the locking arm [11] is rotated in the end position, the front face [116a] of the board [116] takes up an angle of about 90 degrees relative to the guide [8].

21. Device according to claim 19 or 20, **characterized in that** the text on the front face [116a] of the board [116] comprises a message, indicating that the locking arm [11] is in the end position and the device blocks driving away from the loading platform [5], such as the text "stop" and/or "locked" and/or "blocked".

22. Device according to claim 21, **characterized in that** the text has been provided in reverse.

23. Device according to claim 19, **characterized in that** the text and/or symbol on the back face [116b] of the board [116] comprises a user instruction.

24. Device according to claim 15, **characterized in that** means are provided by which the operating mechanism for unlocking can be held, such that this cannot operate the unlocking means.

25. Device according to claim 24, **characterized in that** the means are formed by a member [57] that on the one part [49] is connected to the operating mechanism [42, 42a] and on the other part [50] is connected to a holding means [51], allowing a movement of the operating mechanism in a release position, and preventing a movement of the operating mechanism in a holding position.

26. Device according to claim 25, **characterized in that** the holding means [51] comprises a solenoid [51].

27. Device according to claim 26, **characterized in that** a device for operating the holding means [51] is provided, the control of which takes place under the working of a signal from a sensor [52] for determining the starting position of the locking arm [11], of a signal from a sensor [53] for determining the end position of the locking arm [11], and of a signal from a sensor [[54] for determining the presence of a wheel [2] near the locking arm [11], such, that when the locking arm [11] is in the end position and a wheel [2] is present close by, the holding means [51] is set and kept in the holding position.

28. Device according to claim 27, **characterized in that** the control further takes place under the working of a signal from a sensor for the determining whether or not the loading and unloading platform is closed off, such that when the loading and unloading platform is open the holding means is held in the holding position and when the loading and unloading platform is closed the holding means is set in the release position.

29. Device according to one of the preceding claims, **characterized in that** a control light is provided by means of which a signal takes place of a correct placement against the wheel on the basis of input of present sensors.

## Patentansprüche

1. Vorrichtung [1] zur manuellen Verriegelung des Rades [2] eines LKW auf einer Fahrspur [3] vor einer Fassade [4] mit einer Be- und Entladeplattform [5], aufweisend
eine Führung [8] die längs und parallel zur Fahrspur [3] angeordnet ist, die sich von einer Straßenseite [6] zu einer Fassadenseite [7] erstreckt, und
einen an der Führung [8] beweglichen Schlitten [9], der mit einem Verriegelungsarm [11] versehen ist, der zwischen einer Ausgangsposition, in der sich der Verriegelungsarm [11] entlang der Fahrspur [3] erstreckt, und einer Endposition, in der sich der Verriegelungsarm [11] teilweise über die Fahrspur [3] erstreckt und darin das Rad [2] eines LKWs blockieren kann, bewegbar ist,
wobei die Führung [8] und der Schlitten [9] ein zusammenwirkendes Verriegelungsmittel [16,19] zum Verriegeln des Schlittens [9] an der Führung [8] aufweisen,
wobei die Einrichtung [1] mit Mitteln versehen ist, durch welche die Verriegelungsmittel bei Bewegung des Verriegelungsarms von der Ausgangsposition in die Endposition betätigt werden, wobei die Mitteln gebildet sind durch ein Einstellmittel [18], das beweglich mit dem Schlitten [9] verbunden ist und auf welchem eines der Verriegelungsmittel angebracht ist, **dadurch gekennzeichnet, dass**
das Einstellmittel [18] weiterhin eine Nockenrolle [20] aufweist, die mit Unebenheiten [22] zusammenwirkt, die in der Oberfläche eines Teils [21] des Verriegelungsarmes [11] angeordnet sind, so dass durch die Bewegung des Verriegelungsarmes [11] die Nockenrolle [20] in und/oder über die Unebenheiten [22] bewegt wird,
wodurch das Einstellmittel [18] in Bewegung gesetzt wird und das Verriegelungsmittel des Einstellmittels [18] in Eingriff und außer Eingriff mit dem Verrieglungsmittel der Führung [8] gebracht wird,
wobei der Schlitten [9] ein Gehäuseteil [17] aufweist, auf welches das Einstellmittel [18] hin oder von welchem das Einstellmittel [18] weg bewegt werden kann, wobei zumindest eine Feder [25] bereitgestellt wird, die auf einer Seite an dem Gehäuseteil [17] angebracht ist und auf der anderen Seite an dem Einstellmittel [18] angebracht ist, sodass das Ineingriffbringen und das Außereingriffbringen des Verriegelungsmittels [16], welches auf dem Einstellmittel [18] angebracht ist, mit dem Verriegelungsmittel [19] der Führung [8] mit bzw. gegen die Federkraft stattfindet.

2. Verfahren nach Anspruch 1, **dadurch gekennzeichnet, dass** der Verriegelungsarm [11] die Form eines Stabes oder eines Trägers [12] hat, wobei ein äußeres Ende [13] desselben drehbar auf einer Achse [14] gelagert ist, die vertikal an dem Schlitten [9] angeordnet ist, wobei der Stab oder Träger [12] weiterhin so bereitgestellt wird, dass nur eine seitliche Rotation in Richtung weg von der Fassade [4] und auf die Straßenseite [6] möglich ist.

3. Vorrichtung nach Anspruch 2, **dadurch gekennzeichnet** das der Stab oder Träger [12] in der Endposition einen Winkel von ungefähr 90° relativ zu dem Schlitten [8] einnimmt.

4. Vorrichtung nach einem der voranstehenden Ansprüche 1-3, **dadurch gekennzeichnet, dass** die Unebenheiten [22] durch eine oder mehrere Einbuchtungen [23] oder eine oder mehrere Vorsprünge [24] gebildet werden.

5. Vorrichtung nach einem der voranstehenden Ansprüche 1-4, **dadurch gekennzeichnet, dass** die Unebenheiten [22] auf der Unterseite des äußeren Endes des Verriegelungsarmes [11] bereitgestellt werden, der mit dem Schlitten [9] verbunden ist.

6. Vorrichtung nach einem der voranstehenden Ansprüche 1-5, **dadurch gekennzeichnet dass** die Unebenheiten [22] so an dem Verriegelungsarm [11] bereitgestellt werden, dass durch Drehung des Verriegelungsarmes [11] die Unebenheiten [22] in Kontakt mit der Nockenrolle [20] kommen können, welche auf dem Einstellmittel [18] angeordnet ist.

7. Vorrichtung nach einem der voranstehenden Ansprüche 1-6, **dadurch gekennzeichnet, dass** das Einstellmittel [18] relativ zu dem Gehäuseteil [17] hoch und herunter bewegbar ist, wobei das Verriegelungsmittel, welches auf dem Schlitten [8] bereitgestellt ist, durch eine Zahnstange [16] gebildet wird und das Verriegelungsmittel, welches auf dem Einstellmittel bereitgestellt wird, durch eine Gegenzahnstange [19] gebildet wird, wobei die Zahnstange [16] und die Gegenzahnstange [19] so positioniert sind, dass sich bei einer Aufwärtsbewegung des Einstellmittels [18] die Zähne der Gegenzahnstange [19] in Richtung der Zähne der Zahnstange [16] bewegen.

8. Vorrichtung nach einem der vorstehenden Ansprüche 4-7, **dadurch gekennzeichnet, dass** eine erste Einbuchtung [29] in einer solchen Position auf dem Verriegelungsarm [11] angeordnet ist, dass wenn sich der Verriegelungsarm [11] in der Ausgangsposition befindet, die Nockenrolle [20] in die erste Einbuchtung [29] eingreift.

9. Vorrichtung nach einem der vorstehenden Ansprüche 7-8, **dadurch gekennzeichnet, dass** die Zähne der Zahnstange [16] und die Zähne der Gegenzahnstange [19] geneigt sind und so aneinander angepasst sind, dass wenn die Gegenzahnstange [19] in die Zahnstange [16] eingreift, der Schlitten [9] auf der Führung [8] gegen eine Bewegung in Richtung der Straßenseite [6] verriegelt ist, jedoch nicht gegen eine Bewegung in Richtung der Fassadenseite [7] verriegelt ist.

10. Vorrichtung nach einem der voranstehenden Ansprüche 8-9, **dadurch gekennzeichnet, dass** eine zweite Einbuchtung [30] in einer solchen Position bereitgestellt wird, dass wenn der Verriegelungsarm [11] einen Winkel zwischen ungefähr 65° bis 85° relativ zu der Führung [8] einnimmt, die Nockenrolle [20] in diese zweite Einbuchtung [30] eingreift.

11. Vorrichtung nach Anspruch 10, **dadurch gekennzeichnet, dass** eine dritte Einbuchtung [31] in einer solchen Position bereitgestellt wird, dass wenn der Verriegelungsarm [11] einen Winkel von 90° relativ zu der Führung [8] einnimmt, die Nockenrolle [20] in diese dritte Einbuchtung [31] eingreift.

12. Vorrichtung nach Anspruch 11, **dadurch gekennzeichnet, dass** die dritte Einbuchtung [31] eine solche Tiefe aufweist, dass wenn die Nockenrolle [20] in diese dritte Einbuchtung [31] eingreift, das Einstellmittel [18] derart relativ zu dem Gehäuseteil [17] hoch bewegt wurde, dass die Gegenzahnstange [19] vollständig in die Zahnstange [16] eingreift und der Schlitten [9] gegen eine Bewegung in Richtung der Straßenseite [6] auf der Führung [8] verriegelt ist.

13. Vorrichtung nach einem der vorstehenden Ansprüche 11 und zwölf, **dadurch gekennzeichnet, dass** die Vorrichtung ein Entriegelungsmittel aufweist, mittels dessen die Gegenzahnstange [19] außer Eingriff mit der Zahnstange [16] gebracht werden kann, wenn die Nockenrolle [20] in die dritte Einbuchtung [31] eingreift.

14. Vorrichtung nach Anspruch 13, **dadurch gekennzeichnet, dass** die Entriegelungsmittel durch einen ersten Arm [34] gebildet werden, der mit einem äußeren Ende [35] drehbar an dem Gehäuseteil [17] gelagert ist und mit dem anderen äußeren Ende [36] über einen Verbindungspunkt [37] drehbar mit dem äußeren Ende [38] eines zweiten Arms [39] verbunden ist, wobei der zweite Arm [39] mit dem anderen äußeren Ende [40] drehbar an dem Einstellmittel [18] gelagert ist, wobei die Arme [34,39] von einer Ruheposition, in der die Arme [34,39] einen Winkel relativ zueinander einnehmen, in eine Verstellposition bewegt werden können, in der die Arme [34,39] dazu neigen eher in einer geraden Linie zueinander angeordnet zu sein,
und durch Mittel durch welche das Einstellmittel [18] nach bewegt wird.

15. Vorrichtung nach Anspruch 14, **dadurch gekennzeichnet, dass** der Verbindungspunkt [37] zwischen den Armen [34,39] durch eine weitere, zweite Nockenrolle [41] gebildet wird, die sich in eine Nut [43] einfügt, welche in einem Betätigungsmechanismus zur Entriegelung bereitgestellt wird, zum Beispiel eine Fußpedalplatte [42], wobei die Nut [43] einen ersten Endanschlag [44] und einen zweiten Endanschlag [45] und einen sich rund erstreckenden Mittelteil [46] aufweist, wobei durch bewegen des Betätigungsmechanismus die zweite Nockenrolle [41] von dem ersten Endanschlag [44] zu dem zweiten Endanschlag [45] bewegt werden kann und durch Mittel mit dessen Hilfe die Arme [34,39] von der Ruheposition in die Verstellposition bewegt werden können.

16. Vorrichtung nach einem der voranstehenden Ansprüche 14 oder 15, **dadurch gekennzeichnet, dass** weitere Mittel bereitgestellt werden, mittels derer die Arme [34,39] von der Verstellposition in die Ruheposition bewegt werden können.

17. Vorrichtung nach Anspruch 16, **dadurch gekennzeichnet, dass** weiteren Mittel durch einen Vorsprung [24] gebildet werden, die an dem Verriegelungsarm bereitgestellt werden, sodass wenn die Nockenrolle [20] diesen Vorsprung [24] kontaktiert, das Einstellmittel [18] relativ zu dem Gehäuseteil [17] nach unten bewegt wird, während auf dem Einstellmittel [18] ein Vorsprung [47] in einer Art und Weise relativ zu dem Verbindungspunkt [37] zwischen den Armen [34,39] bereitgestellt wird, dass während der Abwärtsbewegung des Einstellmittels [18] dieser Vorsprung [47] die Arme [34,39] von der Verstellposition in die Ruheposition drückt.

18. Vorrichtung nach einem der voranstehenden Ansprüche, **dadurch gekennzeichnet, dass** der Schlitten [9] mit einem aufrechten Stab mit einem Handgriff bereitgestellt wird.

19. Vorrichtung nach Anspruch 18, **dadurch gekennzeichnet, dass** der Stab mit einem Brett [116] mit einer Vorderseite [116a] und einer Rückseite [116b] bereitgestellt wird, wobei auf einer oder beider dieser Seiten ein Text oder ein Symbol angeordnet ist.

20. Vorrichtung nach Anspruch 19, **dadurch gekennzeichnet, dass** das Brett [116] so an dem Stab angebracht ist, dass wenn der Verriegelungsarm [11] in die Endposition gedreht wird, die Vorderseite [116a] des Bretts [116] einen Winkel von ungefähr 90° relativ der Führung [8] einnimmt.

21. Vorrichtung nach Anspruch 19 oder 20, **dadurch gekennzeichnet, dass** der Text auf der Vorderseite [116a] des Bretts [116] eine Nachricht, wie zum Beispiel den Text "Stopp" und/oder "verriegelt" und/oder "blockiert" aufweist, die anzeigt, dass sich der Verriegelungsarm [11] in seiner Endposition befindet und dass die Vorrichtung die Wegfahrt von der Beladungsplattform [5] verhindert.

22. Vorrichtung nach Anspruch 21, **dadurch gekennzeichnet, dass** der Text rückwärts geschrieben ist.

23. Vorrichtung nach Anspruch 19, **dadurch gekennzeichnet, dass** der Text und/oder das Symbol auf der Rückseite [116b] des Bretts [116] eine Benutzeranleitung aufweist.

24. Vorrichtung nach Anspruch 15, **dadurch gekennzeichnet, dass** Mittel bereitgestellt werden, mittels derer der Betätigungsmechanismus zur Entriegelung festgehalten werden können, sodass die Entriegelungsmittel nicht betätigt werden können.

25. Vorrichtung nach Anspruch 24, **dadurch gekennzeichnet, dass** die Mittel durch ein Element [57] bereitgestellt werden, dass auf der einen Seite [49] mit dem Betätigungsmechanismus [42,42a] verbunden ist und auf der anderen Seite [50] mit einem Haltemittel [51] verbunden ist, dass die Bewegung des Betätigungsmechanismus in einer Freigabeposition erlaubt und die Betätigung des Betätigungsmechanismus in einer Halteposition verhindert.

26. Vorrichtung nach Anspruch 25, **dadurch gekennzeichnet, dass** die Haltemittel [51] einen Solenoid [51] aufweisen.

27. Vorrichtung nach Anspruch 26, **dadurch gekennzeichnet, dass** eine Vorrichtung zur Betätigung der Haltemittel [51] bereitgestellt wird, deren Kontrolle einem Signal eines Sensors [52], zur Bestimmung der Ausgangsposition des Verriegelungsarms [11], einem Signal eines Sensors [53] zur Bestimmung der Endposition des Verriegelungsarm [11] und dem Signal eines Sensors [54] zur Bestimmung der Anwesenheit eines Rades [2] in der Nähe des Verriegelungsarm [11] unterliegt, sodass wenn der Verriegelungsarm [11] in der Endposition ist und sich ein Rad [2] in der Nähe befindet, die Haltemittel [51] gesetzt und in der Halteposition gehalten werden.

28. Vorrichtung nach Anspruch 27, **dadurch gekennzeichnet, dass** die Kontrolle weiterhin dem Signal eines Sensors zur Bestimmung ob die Be- oder Entladeplattform abgeschlossen ist, unterliegt, sodass wenn die Be- oder Entladeplattform geöffnet ist, die Haltemittel in der Halteposition gehalten werden und wenn die Be- oder Entladeplattform geschlossen ist, die Haltemittel in die Freigabeposition gesetzt werden.

29. Vorrichtung nach einem der vorstehenden Ansprüche, **dadurch gekennzeichnet, dass** eine Kontrolllampe bereitgestellt wird, durch welche ein Signal auf Basis der Eingabe von vorhandenen Sensoren für eine korrekte Platzierung gegen das Rad abgegeben wird.

## Revendications

1. Dispositif (1) pour le blocage manuel de la roue (2) d'un camion sur une voie (3) en face d'une façade (4) avec une plate-forme de chargement et de déchargement (5), comprenant un guide (8) placé le long et parallèlement à la voie (3), s'étendant d'un côté route (6) à un côté façade (7), et un chariot (9) mobile sur le guide (8), doté d'un bras de blocage (11) qui peut se déplacer entre une position de départ dans laquelle le bras de blocage (11) s'étend le long de la voie (3) et une position finale dans laquelle le bras de blocage (11) s'étend partiellement au-dessus de la voie (3) et peut bloquer la roue (2) d'un camion, le guide (8) et le chariot (9) étant munis de moyens de blocage coopérant pour provoquer un blocage du chariot (9) sur le guide (8), le dispositif (1) étant doté de moyens par lesquels, en déplaçant le bras de blocage (11) de la position de départ à la position finale, les moyens de blocage sont actionnés, ces moyens étant formé par un organe de réglage (18) qui est connecté de façon mobile au chariot (9) et sur lequel un des moyens de blocage est monté, **caractérisé en ce que** l'organe de réglage (18) est en outre doté d'un galet de came (20) coopérant avec des irrégularités (22) disposées dans la surface d'une partie (21) du bras de blocage (11) de telle sorte qu'en déplaçant le bras de blocage (11), le galet de came (20) est déplacé dans et/ou au-dessus des irrégularités (22), ce qui a pour résultat que l'organe de réglage (18) est mis en mouvement et que le moyen de blocage monté sur l'organe de réglage (18) est mis en prise et hors de prise avec le moyen de blocage placé sur le guide (8), le chariot (9) comprenant une partie boîtier (17) dont l'organe de réglage (18) peut s'approcher et s'éloigner, au moins un ressort (25) étant monté d'un côté sur la partie boîtier (17) et de l'autre côté sur l'organe de réglage (18), de sorte que la mise en prise ou hors de prise du moyen de blocage (16) qui est monté sur l'organe de réglage (18) avec le moyen de blocage (19) qui est disposé sur le guide (8) se fait avec ou contre la force du ressort.

2. Dispositif selon la revendication 1, **caractérisé en ce que** le bras de blocage (11) a la forme d'une barre ou d'une tige (12) dont une extrémité extérieure (13) est placée de manière rotative sur un axe (14) qui est disposé verticalement sur le chariot (9), la barre ou la tige (12) étant en outre disposée de telle façon qu'elle ne peut pivoter latéralement que dans la direction allant de la façade (4) vers le côté route (6).

3. Dispositif selon la revendication 2, **caractérisé en ce que** la barre ou la tige (12) en position finale adopte un angle d'environ 90 degrés par rapport au guide (8).

4. Dispositif selon une des revendications précédentes 1 à 3, **caractérisé en ce que** les irrégularités (22) sont formées par un ou plusieurs creux (23) et une ou plusieurs protubérances (24).

5. Dispositif selon une des revendications précédentes 1 à 4, **caractérisé en ce que** les irrégularités (22) sont disposées sur la face inférieure de l'extrémité extérieure du bras de blocage (11) connecté au chariot (9).

6. Dispositif selon une des revendications précédentes 1 à 5, **caractérisé en ce que** les irrégularités (22) sont disposées sur le bras de blocage (11) de telle manière que, lorsque le bras de blocage (11) pivote, les irrégularités (22) peuvent entrer en contact avec le galet de came (20) disposé sur l'organe de réglage (18).

7. Dispositif selon une des revendications précédentes 1 à 6, **caractérisé en ce que** l'organe de réglage (18) est mobile vers le haut et vers le bas par rapport à la partie boîtier (17), le moyen de blocage disposé sur le guide (8) étant formé par une crémaillère (16) et le moyen de blocage disposé sur l'organe de réglage étant formé par une contre-crémaillère (19), la crémaillère (16) et la contre-crémaillère (19) étant positionnées de telle façon que, lorsque l'organe de réglage (18) se déplace vers le haut, les dents de la contre-crémaillère (19) se déplacent en direction des dents de la crémaillère (16).

8. Dispositif selon une des revendications précédentes 4 à 7, **caractérisé en ce qu'**un premier creux (29) est disposé sur le bras de blocage (11) à un emplacement tel que, quand le bras de blocage (11) est en position de départ, le galet de came (20) tombe dans ce premier creux (29).

9. Dispositif selon une des revendications précédentes 7 et 8, **caractérisé en ce que** les dents de la crémaillère (16) et celles de la contre-crémaillère (19) sont inclinées et adaptées les unes aux autres de sorte que, quand la contre-crémaillère (19) entre en prise avec la crémaillère (16), le chariot (9) est bloqué sur le guide (8) en direction du côté route (6) mais n'est pas bloqué en direction du côté façade (7).

10. Dispositif selon une des revendications précédentes 8 et 9, **caractérisé en ce qu'**un deuxième creux (30) est disposé à un emplacement tel que, quand le bras de blocage (11) adopte un angle d'environ 65 à 85 degrés par rapport au guide (8), le galet de came (20) tombe dans ce deuxième creux (30).

11. Dispositif selon la revendication 10, **caractérisé en ce qu'**un troisième creux (31) est disposé à un emplacement tel que, quand le bras de blocage (11) adopte un angle de 90 degrés par rapport au guide (8), le galet de came (20) tombe dans ce troisième creux (31).

12. Dispositif selon la revendication 11, **caractérisé en ce que** le troisième creux (31) a une profondeur telle que, quand le galet de came (20) est présent dans ce troisième creux (31), l'organe de réglage (18) s'est déplacé vers le haut par rapport à la partie boîtier (17) de telle sorte que la contre-crémaillère (19) est complètement en prise avec la crémaillère (16) et le chariot (9) est bloqué sur le guide (8) en direction du côté route (6).

13. Dispositif selon une des revendications précédentes 11 et 12, **caractérisé en ce qu'**il est doté de moyens de déblocage par lesquels, quand le galet de came (20) est dans le troisième creux (31), la contre-crémaillère (19) peut être mise hors de prise avec la crémaillère (16).

14. Dispositif selon la revendication 13, **caractérisé en ce que** les moyens sont formés par un premier bras (34) qui, à une extrémité extérieure (35), est supporté en rotation sur la partie boîtier (17) et, à l'autre extrémité extérieure (36), est connecté en rotation par le biais d'un point de connexion (37) à l'extrémité extérieure (38) d'un second bras (39), lequel second bras (39) est supporté en rotation à son autre extrémité extérieure (40) sur l'organe de réglage (18), les bras (34, 39) pouvant se déplacer d'une position de repos dans laquelle les bras (34, 39) forment un angle entre eux à une position de réglage dans laquelle les bras (34, 39) tendent à être davantage alignés entre eux, de sorte que l'organe de réglage (18) se déplace vers le bas.

15. Dispositif selon la revendication 14, **caractérisé en ce que** le point de connexion (37) entre les bras (34, 39) est formé par un second galet de came (41) qui s'insère dans une encoche (43) ménagée dans un mécanisme d'actionnement pour le déblocage, par exemple un patin de pédale (42), l'encoche (43) ayant une première butée terminale (44), une seconde butée terminale (45) et une partie médiane courbe (46), le second galet de came (41) pouvant être déplacé de la première butée terminale (44) à la seconde butée terminale (45) par le déplacement du mécanisme d'actionnement, de sorte que les bras (34, 39) peuvent être déplacés de la position de repos à la position de réglage.

16. Dispositif selon une des revendications précédentes 14 ou 15, **caractérisé en ce qu'**il est prévu d'autres moyens par lesquels les bras (34, 39) peuvent être déplacés de la position de réglage à la position de repos.

17. Dispositif selon la revendication 16, **caractérisé en ce que** les autres moyens sont formés par une protubérance (24) disposée sur le bras de blocage (11) de sorte que, quand le galet de came (20) touche cette protubérance (24), l'organe de réglage (18) est déplacé vers le bas par rapport à la partie boîtier (17), une saillie (47) étant disposée sur l'organe de réglage (18) de telle manière par rapport au point de connexion (37) entre les bras (34, 39) que, lorsque l'organe de réglage (18) se déplace vers le bas, cette saillie (47) repousse les bras (34, 39) de la position de réglage à la position de repos.

18. Dispositif selon une des revendications précédentes, **caractérisé en ce que** le chariot (9) est doté d'une tige verticale avec une poignée.

19. Dispositif selon la revendication 18, **caractérisé en ce que** la tige est dotée d'un panneau (116) avec une face avant (116a) et une face arrière (116b) dont l'une ou les deux portent un texte ou un symbole.

20. Dispositif selon la revendication 19, **caractérisé en ce que** le panneau (116) est monté sur la tige de telle manière que, quand le bras de blocage (11) est tourné en position finale, la face avant (116a) du panneau (116) adopte un angle d'environ 90 degrés par rapport au guide (8).

21. Dispositif selon la revendication 19 ou 20, **caractérisé en ce que** le texte sur la face avant (116a) du panneau (116) comprend un message indiquant que le bras de blocage (11) est en position finale et que le dispositif empêche le véhicule de s'éloigner de la plateforme de chargement (5), tel que les mots "stop" et/ou "bloqué".

22. Dispositif selon la revendication 21, **caractérisé en ce que** le texte est écrit à l'envers.

23. Dispositif selon la revendication 19, **caractérisé en ce que** le texte et/ou le symbole sur la face arrière (116b) du panneau (116) comprennent des instructions d'utilisation.

24. Dispositif selon la revendication 15, **caractérisé en ce qu'**il est prévu des moyens par lesquels le mécanisme d'actionnement pour le déblocage peut être maintenu de sorte qu'il ne peut pas actionner les moyens de déblocage.

25. Dispositif selon la revendication 24, **caractérisé en ce que** ces moyens sont formés par un élément (57) dont une partie (49) est connectée au mécanisme d'actionnement (42, 42a) et l'autre partie (50) est connectée à un moyen de maintien (51), permettant le mouvement du mécanisme d'actionnement dans une position de libération et empêchant le mouvement du mécanisme d'actionnement dans une position de maintien.

26. Dispositif selon la revendication 25, **caractérisé en ce que** le moyen de maintien (51) comprend un solénoïde (51).

27. Dispositif selon la revendication 26, **caractérisé en ce qu'**il est prévu un dispositif pour actionner le moyen de maintien (51), dont le contrôle est exercé à l'aide d'un signal d'un capteur (52) pour déterminer la position de départ du bras de blocage (11), d'un signal d'un capteur (53) pour déterminer la position finale du bras de blocage (11) et d'un signal d'un capteur (54) pour déterminer la présence d'une roue (2) près du bras de blocage (11), de sorte que, quand le bras de blocage (11) est en position finale et qu'une roue (2) est présente à proximité, le moyen de maintien (51) est mis et gardé en position de maintien.

28. Dispositif selon la revendication 27, **caractérisé en ce que** le contrôle est en outre exercé à l'aide d'un signal d'un capteur pour déterminer si la plateforme de chargement et de déchargement est fermée ou non, de sorte que, quand la plateforme de chargement et de déchargement est ouverte, le moyen de chargement est maintenu en position de maintien et, quand la plateforme de chargement et de déchargement est fermée, le moyen de maintien est mis en position de libération.

29. Dispositif selon une des revendications précédentes, **caractérisé en ce qu'**il est prévu un témoin lumineux au moyen duquel un signal indiquant le placement correct contre la roue est émis en fonction des données fournies par les capteurs présents.
